Europäisches Patentamt

**European Patent Office**

**Office européen des brevets**

(19)

(11) Numéro de publication: **O 032 334**
**B1**

(12)

# FASCICULE DE BREVET EUROPEEN

(45) Date de publication du fascicule du brevet: **27.04.83**

(51) Int. Cl.³: **H 04 N 5/19, H 04 N 3/15**

(21) Numéro de dépôt: **80401797.8**

(22) Date de dépôt: **12.12.80**

(54) Dispositif photodétecteur générateur d'images vidéo avec réglage automatique de la sensibilité.

(30) Priorité: **04.01.80 FR 8000170**

(43) Date de publication de la demande:
**22.07.81 Bulletin 81/29**

(45) Mention de la délivrance du brevet:
**27.04.83 Bulletin 83/17**

(84) Etats contractants désignés:
**DE GB IT NL SE·**

(56) Documents cités:
**DE - A - 2 447 299**
**FR - A - 2 446 468**
**US - A - 3 904 818**
**US - A - 4 010 319**
**US - A - 4 171 529**

**OPTICAL ENGINEERING, vol. 16, no. 3, mai–juin 1977 Palos Verdes Estates, Cal. US CAMPANA: "Techniques for evaluating charge coupled imagers", pages 267—274**

(73) Titulaire: **THOMSON-CSF**
**173, Boulevard Haussmann**
**F-75379 Paris Cedex 08 (FR)**

(72) Inventeur: **Grancoin, Bernard**
**THOMSON-CSF SCPI 173, bld Haussmann**
**F-75360 Paris Cedex 08 (FR)**
Inventeur: **Pepin, Christian**
**THOMSON-CSF SCPI 173, bld Haussmann**
**F-75360 Paris Cedex 08 (FR)**

(74) Mandataire: **Trocellier, Roger et al,**
**THOMSON-CSF SCPI 173, Bld Haussmann**
**F-75379 Paris Cedex 08 (FR)**

(56) Documents cités:
**IBM TECHNICAL DISCLOSURE BULLETIN, vol. 17, no. 12, mai 1975 New York US PRICER: "Blur correction circuit for scanners", pages 3545—3547**
**IEEE TRANSACTIONS ON AEROSPACE AND ELECTRONIC SYSTEMS, vol. AES-14, no. 1, janvier 1978 New York US SANDHU et al.: "Automatic light-control electro-optical CCDTV systems", pages 69—75**

## Dispositif photodétecteur générateur d'images vidéo avec réglage automatique de la sensibilité

La présente invention concerne un dispositif photodétecteur générateur d'images vidéo, du type caméra solide à transfert de charges procédant par transfert de trame, et qui est équipé d'un réglage automatique de la sensibilité.

Selon une application envisagée, l'invention est particulièrement apte à équiper un système autodirecteur télévision dit autodirecteur TV.

Dans un tel dispositif, le rayonnement incident est focalisé par un objectif optique sur l'organe détecteur proprement dit, encore appelé senseur (dérivé de l'appellation anglo-saxonne sensor). Le signal vidéo détecté est ensuite traité dans des circuits électroniques déterminés en fonction de l'application prévue. Le dispositif photodétecteur peut être incorporé dans un système utilisé au sol ou embarqué, pour obtenir: une localisation angulaire de cible, ou une visualisation d'image de télévision, ou encore une poursuite automatique de cible à partir de la localisation angulaire ou par contraste vidéo, etc...

Les senseurs DTC (abréviation de Dispositif à Transfert de Charge) et procédant par transfert de trame, présentent une organisation matricielle des éléments photodétecteurs. Ils sont fréquemment réalisés avec des circuits CCD (de l'appellation anglo-saxonne Charge Coupled Device). Ces senseurs présentent une sensibilité élevée mais pratiquement constante, c'est-à-dire que la plage de variation du flux lumineux capté par le détecteur doit rester assez limitée pour l'obtention d'un fonctionnement satisfaisant correspondant à une réponse sensiblement linéaire. Dans ces conditions, le signal détecté présente une valeur moyenne correspondant à la valeur de fonctionnement optimal prévue par le fabricant et les risques de saturation se trouvent éliminés.

Pour assurer un fonctionnement automatique de jour satisfaisant d'une caméra TV solide à senseur DTC, il est nécessaire d'atteindre des dynamiques de $10^3$ à $10^4$, la dynamique étant définie par le rapport de l'éclairement maximal de scène à l'éclairement minimal. Il est par suite nécessaire d'accroître considérablement la plage de variation du flux lumineux admissible par le détecteur sans risque de saturation pour ce dernier, c'est-à-dire en agissant sur la sensibilité pour observer un signal vidéo de niveau moyen sensiblement constant. Il n'est pas possible d'exercer une variation de sensibilité par commande électronique comme cela se pratique par un montage à tube vidicon conventionnel.

Il est connu par le document de brevet DE—A—2 447 299 un montage détecteur matriciel en circuits à transfert de charge doté de moyens électroniques d'asservissement du signal vidéo par variation de la durée d'intégration. Il utilise un filtre, un comparateur à seuil et un modulateur de largeur d'impulsion attaquant un mélangeur interposé sur une voie de synchronisation. On ne peut cependant avec ce montage pas trop réduire pa durée d'intégration sans voir apparaître une rapide dégradation de l'image lorsque cette durée vient à se rapprocher de celle nécessaire au transfert, et la dynamique d'exploitation reste très limitée.

Une solution mécanique envisageable décrite dans le document de brevet FR—A—2 446 468 consiste à introduire un diaphragme dans l'optique de focalisation pour modifier le flux lumineux mais l'accroissement de la dynamique qui en résulte reste encore très limité. En outre, pour placer une caméra TV à senseur DTC à l'intérieur d'un autodirecteur de missile, il n'est pas souhaitable d'avoir à prévoir au niveau de l'optique un montage diaphragme motorisé compte tenu, d'une intégration rendue plus difficile sur une structure gyroscopique, d'une faisabilité plus délicate et des exigences sévères imposées de compacité et de fiabilité.

Une autre solution de type mécanique décrite dans le document de brevet US—A—4 171 529 met en oeuvre, sur une caméra TV conventionnelle, des disques interposés sur le trajet optique et entraînés en rotation pour produire une exposition de durée variable pour pouvoir prendre des vues à très grande vitesse. Les disques au nombre de deux sont pourvus de fentes et conçues de manière particulière pour répondre à ce problème. Cette solution s'avère comme dans le cas précédemment exposé, inexploitable sur un montage gyroscopique pour autodirecteur.

Un objet de la présente invention est de remédier aux inconvénients et limitation des solutions précitées en réalisant un dispositif dans lequel le signal vidéo détecté par le senseur DTC est maintenu sensiblement constant de façon automatique lorsque l'éclairement moyen sur la scène observée varie de manière importante.

La solution proposée combine la solution électrique de réglage de la durée d'intégration avec la solution mécanique à disques mais en adapant celle-ci en sorte de lui faire jouer une fonction d'obturation lors de chaque durée de transfert; l'arrêt du collectage des charges par le détecteur durant les périodes de transfert permet de fonctionner avec des durées d'intégration très faibles et ainsi d'accroître notablement la plage de réglage de la sensibilité et consécutivement le dynamique d'exploitation de la caméra.

Un autre objet de l'invention est de réaliser un dispositif particulièrement adapté à son intégration sur une structure gyroscopique d'un autodirecteur TV équipant un missile.

Suivant l'invention telle que revendiquée, il est réalisé un dispositif photodétecteur générateur d'images vidéo du type caméra solide à transfert de charge procédant par transfert de trame, équipé d'un réglage automatique de sensibilité et comportant une optique de focalisation du rayonnement sur la zone image d'un détecteur matriciel, un générateur des signaux de synchronisation du détecteur et des moyens de réglage de la sensibilité du détecteur comportant des moyens d'asservissement du signal vidéo par variation de la durée d'intégration pendant laquelle les électrons sont collectés dans la zone image du détecteur au cours de chaque période de trame, et étant caractérisé en ce que ces moyens de réglage de la sensibilité du détecteur comportent en outre, des moyens d'atténuation optique utilisant un ensemble de disques interposés sur le trajet optique de réception pour agir sur la transmission lumineuse vers le détecteur, et des moyens d'entraînement synchronisés par le générateur pour entraîner au moins l'un des disques en rotation et produire un mouvement relatif périodique à la fréquence de trame, l'ensemble atténuateur étant déterminé de manière que la transmission optique varie ainsi à la cadence de trame, et qu'elle présente une valeur minimale produisant un effet d'obturation de la zone d'image à chaque période de trame durant l'intervalle de temps pendant lequel s'effectue le transfert des charges collectées vers la zone mémoire du détecteur ledit effet d'obturation entraînant un arrêt de collectage de charges dans la zone image ce qui complète l'effet de variation de la durée d'intégration par les moyens d'asservissement et accroît la dynamique d'exploitation du dispositif photodétecteur.

D'autres particularités et avantages de l'invention apparaîtront dans la description qui suit, donnée à titre d'exemple non limitatif à l'aide des figures qui représentent:

— la figure 1, un schéma général d'un dispositif photodétecteur conforme à l'invention;
— la figure 2, des signaux relatifs au fonctionnement du dispositif selon la figure 1;
— les figures 3a à 3f, des schémas montrant la variation du positionnement relatif entre deux disques atténuateurs produisant une obturation périodique;
— les figures 4 et 5, des schémas d'une première variante de réalisation des disques atténuateurs;
— les figures 6 et 7, un schéma d'une deuxième variante de réalisation des disques atténuateurs et des courbes de variations de densité correspondantes;
— la figure 8, un diagramme d'un exemple de réalisation du dispositif photodétecteur, montrant plus en détail les moyens de réglage de sensibilité;
— les figures 9 et 10, un diagramme d'un circuit partiel de la réalisation selon la figure 8, et des formes d'ondes correspondantes;
— la figure 11, un schéma simplifié d'une variante de réalisation du dispositif photodétecteur utilisant des disques polariseurs;
— la figure 12, des courbes relatives à la variation d'atténuation procurée par le montage selon la figure 11;
— la figure 13, un schéma relatif à une application du dispositif photodétecteur à un autodirecteur TV.

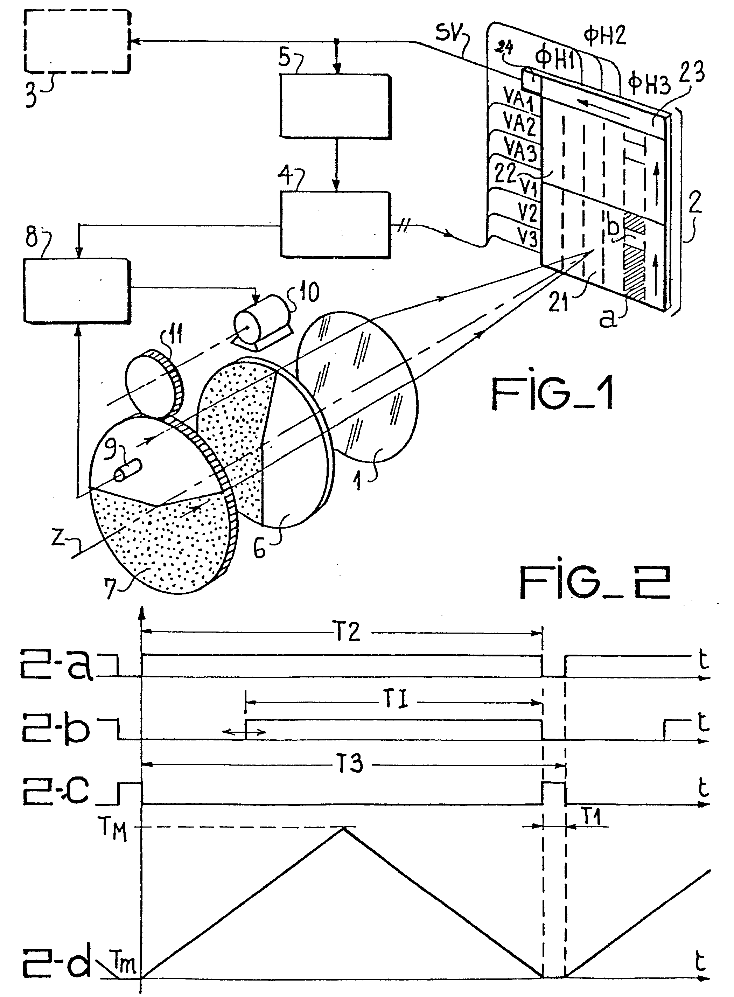

En se reportant au schéma général Fig. 1, le dispositif photodétecteur comporte un objectif optique I qui focalise le rayonnement de réception sur une mosaïque photosensible en circuits DTC formant le détecteur 2. Le signal video-fréquence SV détecté est transmis à des circuits annexes d'exploitation 3. Le signal SV correspond à une analyse ligne par ligne de l'image du type télévision. Le bloc 4 représente les moyens de synchronisation élaborant les signaux nécessaires au transfert et à l'analyse de l'image.

Conformément à l'invention, cette structure est aménagée pour permettre un réglage de la sensibilité du détecteur autorisant le fonctionnement dans une large plage de variation de l'éclairement moyen de la scène observée. Les moyens de réglage comportent, d'une part, un asservissement 5 qui agit en fonction de la valeur du signal video SV sur le paramètre durée d'intégration pendant laquelle s'effectue la conversion en charges électriques des photons captés par le senseur et d'autre part, un agencement atténuateur optique destiné à produire une obturation périodique sensiblement totale de l'optique réceptrice durant chaque intervalle de transfert de charge. L'agencement atténuateur comporte deux disques plans coaxiaux selon l'axe Z de l'optique de réception, un premier disque 6 étant fixe et le deuxième disque 7 mobile en rotation autour de l'axe Z et à une vitesse angulaire synchrone de la fréquence de trame du balayage image. Les disques ont été représentés à distance l'un de l'autre pour clarifier la représentation, il est entendu qu'ils sont très proches disposés en vis-à-vis. Des moyens d'asservissement en rotation du disque mobile 7 permettent d'assurer le synchronisme désiré. Cet asservissement est symbolisé par des circuits 8 procédant par comparaison de phase, un dispositif capteur de position 9, un bloc moteur 10 et un mécanisme d'entraînement 11.

Pour mieux comprendre l'invention, et faire apparaître le procédé mis en oeuvre, on rappelle d'abord dans ce qui suit succintement le fonctionnement connu d'un senseur DTC à transfert de trame.

La surface de silicium comporte trois parties. Une partie photosensible 21, ou surface d'intégration, sur laquelle est formée l'image optique de la scène observée. Cette surface est constituée par une mosaïque d'éléments groupant par exemple 256 lignes de 320 photo-éléments. Chaque photo-éléments convertit la lumière qu'il reçoit en une charge d'électrons.

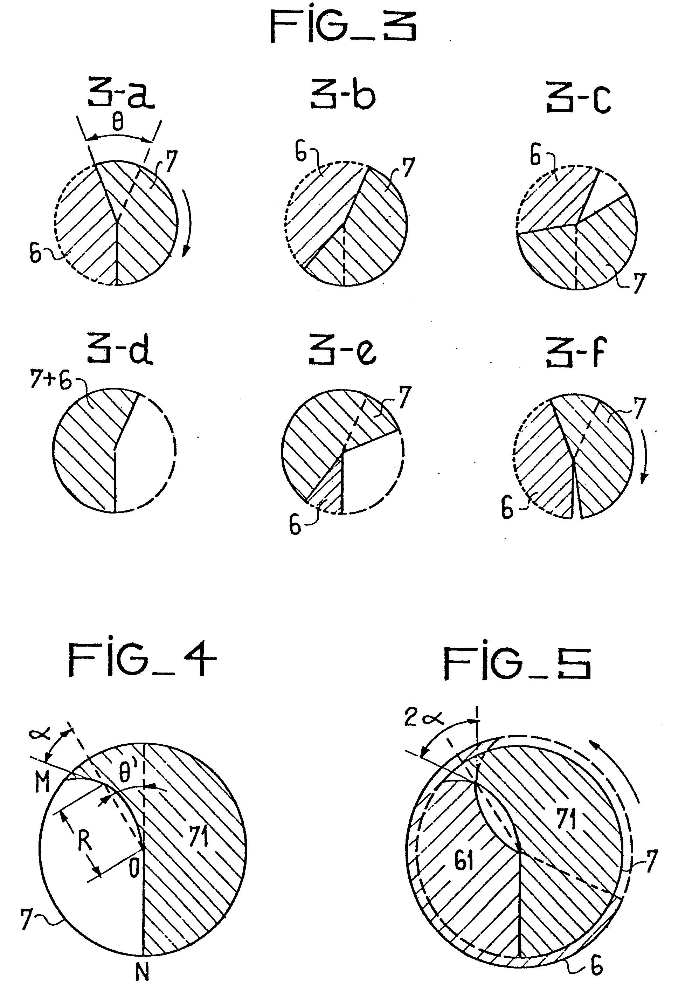

En fait, il y a trois groupes entrelacés de 256 lignes de 320 éléments. Chaque groupe reçoit respectivement des signaux d'horloge V1, V2, V3 qui permettent d'effectuer un pseudo-entrelacé grâce à la permutation de la polarisation de deux groupes de lignes sur deux trames successives, et le transfert vertical des charges accumulées pendant la période T1 de suppression trame (fig. 2c). Une deuxième partie 22, ou surface mémoire tampon, sensiblement identique à la précédente, est destiné à recevoir les charges provenant de la surface 21. Le transfert vertical des charges est produit par application des signaux d'horloge VA1, VA2, VA3 qui servent également pour effectuer ligne par ligne le transfert parallèle de la mémoire 22 vers le registre 23 pendant la durée T2 (Fig. 2a) de la trame suivante. La troisième partie est constituée par le registre 23 et l'étage de sortie video 24. Dans l'exemple considéré le registre comporte trois groupes de 320 cellules, chaque groupe recevant une horloge commune respectivement ØH1, ØH2, ØH3, à la fréquence point pour effectuer une lecture séquentielle série ligne par ligne des charges de la mémoire.

L'amplitude du signal fourni par le détecteur est fonction de l'éclairement reçu par la surface photosensible. Si l'éclairement est trop important, il se produit un phénomène de saturation lorsque les puits de potentiels créés sous les électrodes sont comblés par les photo-électrons libérés; cette saturation se traduit par une limitation de l'amplitude du signal vidéofréquence. Si par contre, l'éclairement est trop faible, le rapport signal/parasites se dégrade et devient rapidement très faible, rendant inexploitable le signal fourni.

Le dispositif photodétecteur selon l'invention est doté de moyens de reglage automatique de la sensibilité dans le but de faire travailler le senseur dans ses conditions optimales, c'est-à-dire légèrement en-dessous de la saturation.

Le nombre d'électrons collectés est fonction de la surface atteinte par les rayons lumineux, de l'intensité de l'éclairement et du temps pendant lequel ils peuvent être collectés. Suivant l'invention on fait varier ce dernier paramètre appelé temps ou durée d'intégration.

A titre d'exemple, les conditions nominales de fonctionnement d'un senseur DTC lui procurant une sensibilité maximale sont: durée d'intégration T2 de 19ms pour une durée de transfert T1 vers la mémoire de 1ms, donc pendant 95% de la période de trame T3 (Figs 2a et c).

Le dispositif photodétecteur agit donc par diminution de la sensibilité en réduisant le temps d'intégration TI comme représenté à titre d'exemple sur la figure 2b, la valeur maximale de TI étant T2=T3−T1, en considérant la période de trame T3 et la durée de transfert T1 constantes (fig. 2c).

Une limite à cette réduction est rapidement atteinte, en effet, pendant la durée T1 de transfert des charges de la partie photosensible 21 vers la partie mémoire 22, les cellules continuent à intégrer des charges lors-qu'elles reçoivent de la lumière et, ainsi que le montre la figure 1 ou une portion considérée de l'image analysée consiste en un carré blanc *b* sur un fond noir *a*. Les charges de la partie *a* vont, au moment de leur passage devant le carré *b* situé au-dessus, collecter d'autres charges parasites. Il en résulte que, une fois de transfert terminé, la partie *a* en mémoire n'apparaîtra pas noire, mais grise, comme un traînage d'amplitude constante et proportionnel au temps pendant lequel des charges de la partie *a* défilent devant la surface *b* et à l'intensité lumineuse frappant cette surface. Comme il n'est pas possible, sur les senseurs DTC actuellement commercialisés de réduire le temps de transfert, on conçoit aisément qu'une dégradation de la qualité de l'image apparaîtra rapidement lorsqu'on voufra réduire le temps d'intégration à des valeurs faibles et voisines du temps de transfert, soit de l'ordre de 1 à 2ms, ce qui revient à dire que l'asservissement ne pourrait maintenir constant le signal moyen video que pour des rapports de luminosité de l'ordre de 10 à 20.

Conformément à l'invention on augmente considérablement cette dynamique de sensibilité en réalisant devant la matrice une obturation synchrone qui supprime ou diminue notablement l'éclairement pendant la période de transfert T1 de la zone image vers la zone mémoire en sorte d'éliminer l'effet nuisible précité.

La durée d'intégration minimale pourra alors prendre des valeurs très faibles, ce qui conduit à des dynamiques de $10^3$ à $10^4$ qui s'avèrent suffisantes pour assurer le fonctionnement automatique de jour d'une caméra de TV à senseur DTC.

Les moyens d'atténuation optique peuvent être réalisés comme représenté sur la figure 1 avec deux disques identiques, l'un 6 fixe et l'autre 7 entraîné en rotation. Chaque disque comporte un secteur transparent et un secteur opaque, d'angle au centre respectif $\pi-\theta/2$ et $\pi+\theta/2$. La valeur angulaire $\theta$ est déterminée de manière à correspondre à la durée d'obturation désirée, c'est-à-dire au temps T1, par la vitesse de rotation V donnée par

$$\frac{2\pi}{T3}t.$$

Sur la figure 2d se trouve représentée la variation de la transparence globale présentée par l'ensemble des deux disques, entre une valeur minimale Tm et une valeur maximale TM. La valeur Tm est celle présentée pendant la durée T1 d'obturation où la partie opaque du disque mobile 7 cache en totalité la zone transparente du disque fixe 6. Le début et la fin de cette phase d'obturation sont schématisés respectivement sur les figures 3a et 3b. La valeur minimale Tm est très faible, elle correspond au flux lumineux résiduel qui traverse les couches opaques dites densités des disques 6 et 7. La valeur maximale TM est produite lorsque les secteurs transparents des disques 6 et 7 coïncident (figure 3d). Les figures 3c et 3e représentent des positions intermédiaires et la figure 3f, une position très proche de celle du début de l'obturation (Fig. 3a). Pour cette position dite de fermeture, la zone transparente commune se trouve réduite à une fente de plus en plus mince qui donne naissance à de la diffraction. Il en résulte une perte de modulation de l'image pendant le court instant qui précède l'obturation. Pour pallier cet inconvénient, la forme du dépôt opaque 71 peut être modifiée comme représenté sur la figure 4 pour l'un des disques 7 et sur la figure 5 pour l'ensemble des deux disques. La forme est courbe au lieu d'être linéaire dans la partie terminale OM correspondante en sorte d'éviter la formation d'une fente étroite à la fermeture. A titre d'exemple la loi de variation de la courbe OM peut être celle d'une spirale $R=K\theta$ avec $K=l/tg\alpha$ c'est-à-dire que la tangente en un point fait un angle constant $\alpha$ avec le rayon correspondant; avec cette loi de variation les bords correspondants font entre eux un angle constant $2\alpha$ lors de l'obturation comme indiqué sur la figure 5. Il peut être remarqué que l'autre bord de la densité 71 du disque 7 (ou 61 du disque 6) peut rester inchangé, constitué par le rayon ON (Fig. 4); le phénomène de diffraction causé à l'ouverture c'est-à-dire pendant le court instant qui suit la fin de l'obturation (Fig. 3b) n'est en effet pas gênant car il interviendra généralement en dehors de la durée d'intégration TI (Fig. 2b) à l'exception du cas limite TI=T2 (Fig. 2a). Dans le cas des disques représentés sur la figure 5, le phénomène de diffraction à la fermeture est notablement réduit mais pour une même valeur de recouvrement $\theta$ imposée par le temps T1 de transfert, la transmission maximale TM est un peu plus faible.

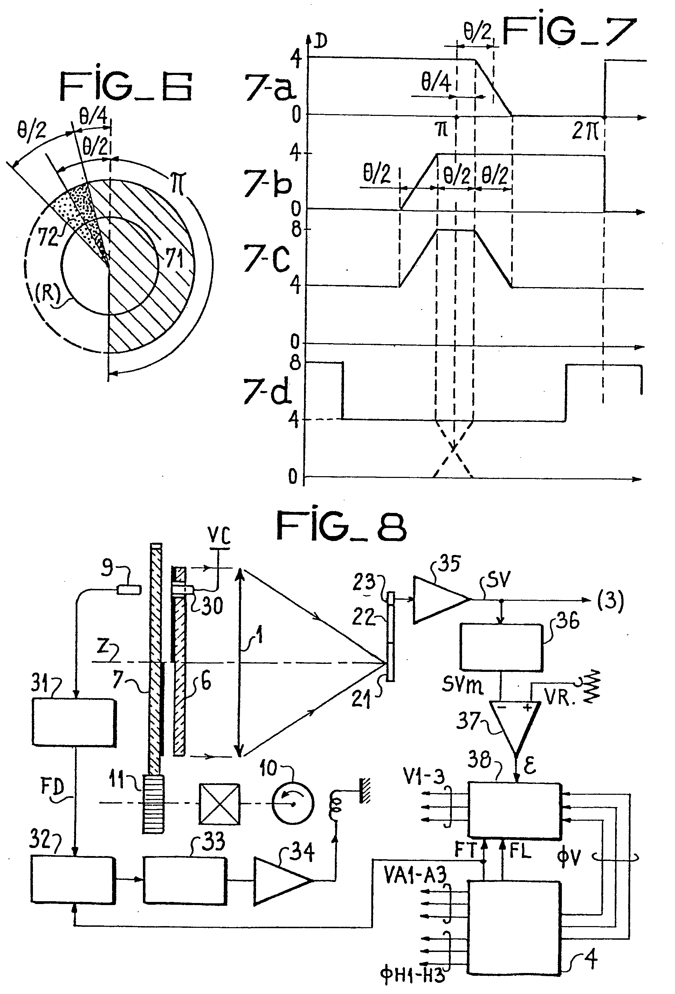

Une autre solution qui peut d'ailleurs être cumulée avec la précédente, consiste à produire une variation de densité dans la partie terminale correspondante de la zone opaque 71, selon les techniques des atténuateurs dégradés angulaires. Sur l'exemple représenté à la figure 6, le secteur opaque 71 d'angle au centre $\pi+\theta/4$ est prolongé par un secteur 72 d'angle $\theta/2$ où la densité diminue progressivement selon une loi déterminée, par exemple linéaire, quadratique ou autre. La variation de la densité le long d'un cercle moyen (R) est par exemple du type représenté sur la figure 7a pour un premier disque et sur la figure 7b pour le deuxième disque. La courbe 7c représente la densité globale présentée par les deux disques en fin d'obturation et la figure 7d la densité globale en début d'obturation (rotation de $\theta$ par rapport à la figure 7c).

La figure 8 représente un diagramme d'une réalisation du dispositif photodétecteur selon la figure 1. Les disques 6 et 7 sont disposés très proches l'un de l'autre avec les faces portant les densités placées en regard, en sorte que celles-ci peuvent être considérées sensiblement coplanaires sur le trajet optique axial.

Les moyens d'asservissement en rotation du disque 7 comportant le dispositif capteur de position qui peut consister en une cellule photoélectrique 9 couplée à une diode électroluminescente 30 encastrée dans une partie axiale évidée du disque 6 et débouchant dans la zone opaque de ce dernier. Le signal détecté FD par la cellule 9 est remis en forme en 31 pour obtenir une impulsion fine, ou top, à chaque tour, et est appliqué ensuite à un comparateur de phase 32 qui reçoit par ailleurs le signal de trame FT. Le signal d'erreur issu du comparateur alimente à travers un filtre correcteur 33 et un amplificateur 34 le moteur d'entraînement 10. Cette boucle permet de produire un asservissement de position et de phase c'est-à-dire de la vitesse; le comparateur de phase 32 peut en effet être conçu selon des techniques connues pour que sa sortie corresponde à un niveau continu proportionnel à la différence de phase des signaux incidents lorsque leur fréquence est égale, tandis qu'un niveau maximum ou minimum indique que les fréquences sont inégales, l'une étant supérieure à l'autre et vice et versa.

Les moyens d'asservissement du signal video par régulation du temps d'intégration (circuit 5, figure 1) comportent un circuit intégrateur 36 du signal video SV amplifié préalablement dans un circuit 35. Le circuit 36 délivre le signal video moyen SVm lequel est comparé dans le circuit 37 au seuil VR ajusté à la valeur référence video moyenne à respecter pour le bon fonctionnement du senseur. La sortie $\varepsilon$ du comparateur à seuil 37 constitue le signal d'erreur appliqué à un circuit 38 de régulation du temps d'intégration TI par action sur les signaux V1, V2, V3 destinés à la surface d'intégration 21. Le générateur 4 délivre les signaux d'horloge ØH1 à ØH3, VA1 à VA3 et des signaux ØV correspondant aux signaux V1 à V3 dans le cas d'une durée d'intégration égale à la valeur T2 (fonctionnement conventionnel du senseur DTC).

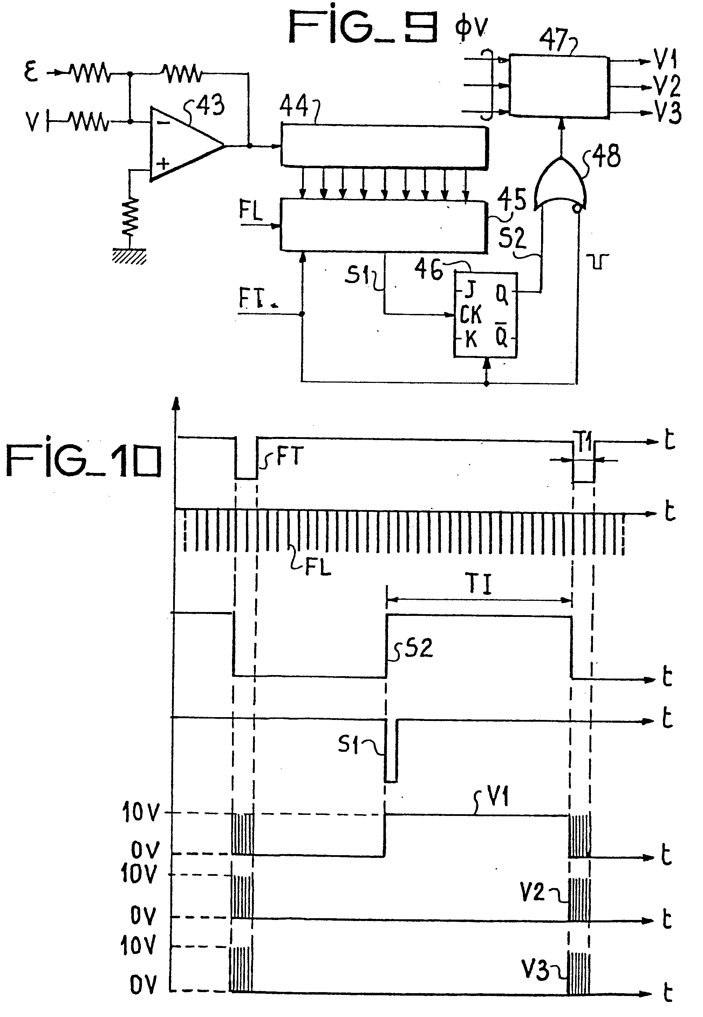

Le circuit régulateur 38 est détaillé sur la figure 9 et la figure 10 représente des signaux relatifs à son fonctionnement. Le signal d'erreur $\varepsilon$ est sommé avec une composante continue V en sorte que le résultat correspondant est toujours positif et est appliqué à l'amplificateur opérationnel 43. Le signal amplifié est converti en numérique dans le circuit de conversion analogique-numérique 44 pour former un mot ayant un nombre de bits suffisant, par l'exemple neuf bits pour pouvoir compter au moins 288 lignes. Cette information numérique vient prépositionner un compteur numérique 45 qui compte l'horloge FL correspondant à la fréquence ligne. Lorsque le compteur parvient en fin de comptage, il délivre un signal impul- tionnel S1 qui est transmis sur l'entrée horloge CK d'une bascule 46 type JK et qui la fait commuter. La bascule 46 ainsi que le compteur 45 sont remis à zéro par l'impulsion suivante du signal de trame FT. La sortie Q de la bascule délivre l'impulsion S2 dont la durée correspond au temps d'intégration TI. Le signal S2 commande à la fermeture des circuits portes analogiques 47 pour laisser passer pendant la durée TI d'impulsion les signaux ØV formant les signaux V1, V2 et V3 appliqués à la partie intégratrice 21 du senseur DTC. L'un des trois signaux ØV est à une tension positive, 10 volts par exemple, tandis que les deux autres sont à zéro volt. Pour la trame considérée, c'est le signal correspondant à V1 qui est à 10 V. Avant la fermeture des portes 47 les sorties V1 et V3 sont toutes à zéro volt et il n'y a pas d'intégration de charges électriques au niveau de la surface sensible 21 du senseur. Dès l'instant de fin du comptage qui dépend de la valeur moyenne video, les portes 47 sont fermées et le signal V1 passe à 10V autorisant l'intégration. Dès la fin de la trame, pendant la durée T2 de transfert les signaux ØV conventionnels sont produits et doivent être transmis pour effectuer le transfert ligne par ligne en mémoire 22. Le maintien à la fermeture des portes 47 est assuré pendant la durée T1 par un circuit porte OU 48 interposé sur la liaison de commande S2 et qui reçoit par une deuxième entrée l'impulsion FT. Après transfert, un nouveau cycle de trame débute, les portes 47 sont à nouveau à l'ouverture et les sorties V1 à V3 à zéro volt jusqu'à la fin de comptage suivante et ainsi de suite.

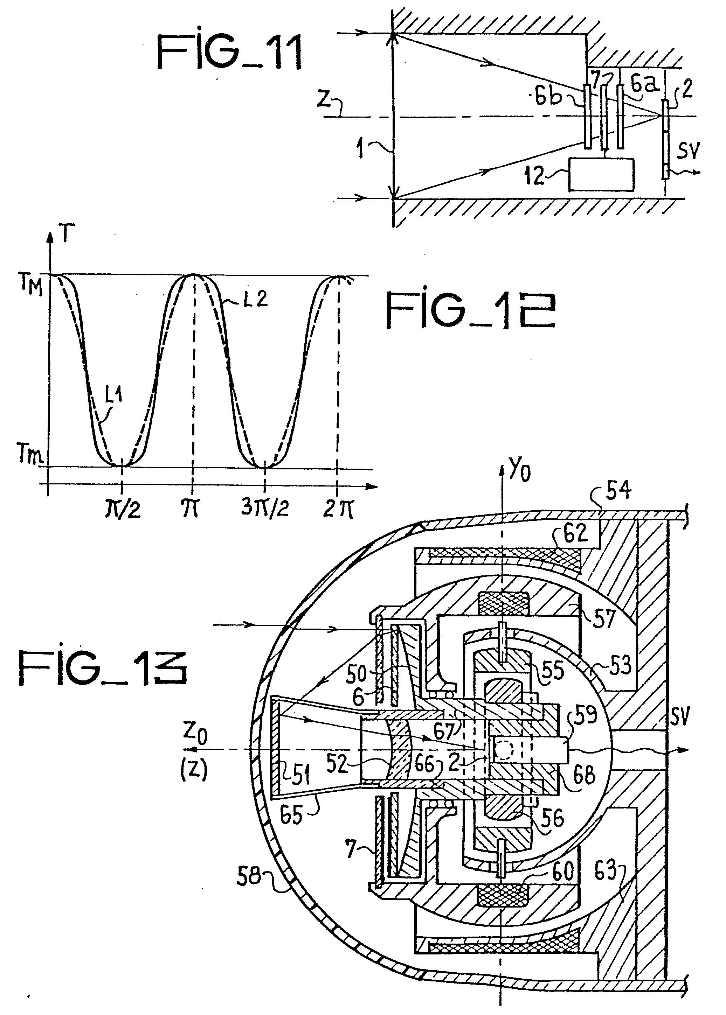

Les disques atténuateurs peuvent être réalisés de manière autre qu'avec des densités comme il a été décrit précédemment. Un autre moyen de produire l'atténuation optique désirée consiste à utiliser des disques en matériaux du type polariseur. La structure peut être maintenue à deux disques, l'un fixe et l'autre mobile. Un avantage résulte du fait que, les disques ne sont plus nécessairement à placer tous les deux à proximité l'un de l'autre et sensiblement dans un plan de pupille, mais qu'ils peuvent être disposés indifféremment sur le chemin optique axial. En particulier, les disques peuvent être réalisés de faibles dimensions s'ils sont positionnés près du senseur et donc près du plan focal image. Par contre, l'atténuation est élevée et l'obturation est moins efficace que pour les montages précédents, ceci résulte de la loi de variation sinusoïdale de la transmission au cours d'un tour. Cette loi est représentée en L1 pour deux disques polariseurs sur la figure 12. On peut remarquer que la période de variation de la transmission est produite au cours d'une demi-rotation et en conséquence, le disque mobile doit être entraîné à une vitesse deux fois moindre avec un calage de position tel que la durée de transfert T1 reste bien centrée sur la position correspondant à la transmission minimale Tm. La dynamique que l'on peut obtenir électroniquement sur le senseur DTC est par suite plus faible que dans le cas du montage à transparence variable. Avec deux polariseurs on peut obtenir TM≃0,1, Tm≃0,0005 et une dynamique de 280 environ. Pour augmenter la dynamique, on utilise un troisième disque polariseur et le montage comporte, comme représenté sur la figure 11, deux disques fixes 6a et 6b et le disque mobile 7 avec son dispositif d'entraînement symbolisé par le bloc 12. Les disques fixes sont orientés à axes de polarisation parallèles. La loi d'atténuation représentée en L2 sur la figure 12 présente des minimums et des maximums plus évasés, la valeur TM est en réalité environ la moitié que dans le cas de deux polariseurs, la valeur Tm est aussi beaucoup plus faible et la dynamique obtenue est aisément supérieure à 1500. Il peut être remarqué que la dynamique s'accroît très vite pour un montage à polariseurs si l'on peut réduire le temps de transfert image/mémoire du senseur; par exemple, avec seulement deux disques et si la durée T1 passe de 1ms à 0,2ms, la dynamique passera de 280 à 1900.

Dans le cadre d'une application à un système autodirecteur télévision à senseur DTC, le dispositif photodétecteur de la figure 1 pourra être aménagé comme représenté à titre d'exemple sur la figure 13. L'objectif optique est un système du type Cassegrain avec un miroir principal 50, un miroir secondaire 51 et une optique correctrice 52 précédant le détecteur 2. Le système optique Cassegrain, le détecteur 2 et les disques 6 et 7 sont suspendus à la cardan selon un montage gyroscope libre à toupie extérieure. La suspension à deux degrés de liberté est identifiable par un premier cadre 53 solidaire du bâti ou corps extérieur 54, une partie centrale 55 annulaire pouvant tourner autour de l'axe de référence Yo, et un deuxième cadre 56 pouvant tourner autour d'un axe X perpendiculaire à Yo et à l'axe optique Z ou axe du gyroscope. La toupie 57 ou masse gyroscopique est entraînée en rotation autour de l'axe Z et entraîne le disque mobile 7. Les disques 6 et 7 sont positionnés à proximité du miroir principal 50. Le disque 6 est solidaire de ce miroir tandis que le disque 7 est couplé mécaniquement par sa périphérie à la toupie 57. Le gyroscope est représenté avec son axe Z dirigé selon la position de référence Zo correspondant à l'axe longitudinal du missile (angle de pointage nul, axe X perpendiculaire au plan de figure).

Sur cette vue en coupe selon Zo Yo on distingue en outre un radome d'extrémité transparent 58, un dispositif de refroidissement 59 pour maintenir le détecteur 2 à basse température. La toupie peut consister en un aimant, ou comporter des bobinages 60. Les bobines 62 dites de précession sont montées fixes sur un support 63 solidaire du corps 54 du missile. La toupie 57 est découplée de l'ensemble optique et détecteur par un roulement à billes 64 et entraîne en rotation le disque 7. Le miroir secondaire 51 est supporté par des moyens mécaniques 65 pouvant consister en un ensemble de bras en matériau plastique par exemple. Les pièces cylindriques 66, 67 et 68 servent de moyens support mécaniques de l'optique 50, 51 et 52 et de l'ensemble détecteur 2—59, et de couplage de ces éléments au deuxième cadre 56.

Il peut être remarqué que le dispositif gyroscopique libre n'implique pas nécessairement une suspension à la cardan avec la toupie extérieure, le montage avec la toupie intérieure est également envisageable. A titre d'exemple, l'optique peut comporter une lentille d'entrée fixe solidaire du bâti et un miroir convexe solidaire de la toupie et qui renvoie le rayonnement vers le détecteur disposé dans la partie centrale évidée de l'optique d'entrée. Cette conception convient en particulier pour l'utilisation de disques poariseurs de faibles dimensions.

On peut se rendre compte que de multiples variantes sont possibles répondant aux caractéristiques de l'invention dont la description qui précède fait apparaître les avantages résultant de l'application à tout système comportant un détecteur à haute sensibilité du type senseur DTC à transfert de trame et notamment à des systèmes autodirecteurs télévision.

**Revendications**

1. Dispositif photodétecteur générateur d'images vidéo du type caméra solide à transfert de charge procédant par transfert de trame, équipé d'un réglage automatique de sensibilité et comportant une optique (1) de focalisation du rayonnement sur la zone image d'un détecteur matriciel (2), un générateur (4) des signaux de synchronisation du détecteur et des moyens (3 à 10) de réglage de la sensibilité du détecteur comportant des moyens (5) d'asservissement du signal vidéo par variation de la durée d'intégration (TI) pendant laquelle les électrons sont collectés dans la zone image (21) du détecteur au cours de chaque période de trame (T3), et étant caractérisé en ce que ces moyens de réglage de la sensibilité du détecteur comportent en outre, des moyens d'atténuation optique (6 à 10) utilisant un ensemble de disques (6—7) interposés sur le trajet optique de réception pour agir sur la transmission lumineuse vers le détecteur, et des moyens d'entraînement (8 à 11) synchronisés par le générateur (4) pour entraîner au moins l'un (7) des disques en rotation et produire un mouvement relatif périodique à la fréquence de trame, l'ensemble atténuateur étant déterminé de manière que la transmission optique varie ainsi à la cadence de trame et qu'elle présente une valeur minimale produisant un effet d'obturation de la zone d'image à chaque période de trame (T3) durant l'intervalle de temps (T1) pendant lequel s'effectue le transfert des charges collectées vers la zone mémoire (22) du détecteur (2), ledit effet d'obturation entraînant un arrêt de collectage de charges dans la zone image ce qui complète l'effet de variation de la durée d'intégration par les moyens d'asservissement et accroît la dynamique d'exploitation du dispositif photodétecteur.

2. Dispositif selon la revendication 1, caractérisé en ce que l'ensemble de disques comporte au moins deux disques (6, 7) identiques, plans, coaxiaux avec l'axe optique (Z), et que les moyens d'entraînement (8 à 11) produisent une rotation relative des disques autour de l'axe à une vitesse angulaire synchrone de la fréquence de trame.

3. Dispositif selon la revendication 2, caractérisé en ce que l'ensemble de disques se compose d'un disque fixe (6) et d'un disque mobile (7) mû par les moyens d'entraînement (8 à 11).

4. Dispositif selon la revendication 3, caractérisé en ce que les disques sont réalisés en matériau transparent avec une densité (61, 71) déposée sur une face selon un secteur d'angle au centre $\pi + \theta/2$, l'angle $\theta$ étant déterminé pour produire la durée d'obturation désirée, les faces portant les densités étant situées en vis-à-vis sensiblement au niveau de la pupille optique.

5. Dispositif selon la revendication 4, caractérisé en ce que l'un des bords radial du dépôt est courbe (61, 71) en sorte d'éviter un effet de diffraction à l'instant de fin d'intégration correspondant à celui initial de transfert des charges.

6. Dispositif selon la revendication 4 ou 5, caractérisé en ce que le dépôt comporte un secteur supplémentaire (72) avec une densité variable formant atténuateur dégradé angulaire.

7. Dispositif selon la revendication 3, caractérisé en ce que les disques sont réalisés en matériau polariseur et que la vitesse de rotation est rendue synchrone de la demi-fréquence de trame.

8. Dispositif selon la revendication 7, caractérisé en ce qu'il comporte un troisième disque polariseur (6b), fixe et orienté en sorte que son axe de polarisation est parallèle à celui du premier disque (6a) fixe.

9. Dispositif selon l'une quelconque des revendications 3 à 8, caractérisé en ce que les moyens d'entraînement sont formés d'une boucle de phase pour asservir en position et en vitesse le disque mobile, la boucle comportant en série, un comparateur de phase (32) pour comparer la fréquence de rotation à celle de trame, un circuit filtre (33) et un amplificateur d'alimentation (34) d'un organe moteur (10).

10. Dispositif selon l'une quelconque des revendications 1 à 9, caractérisé en ce que les moyens d'asservissement video comportent en série, un circuit d'intégration (36) du signal video détecté délivrant la valeur moyenne video (SVm), un comparateur à seuil (37) pour comparer cette valeur moyenne à une valeur de référence (VR) et un circuit (38) régulateur du temps d'intégration qui modifie cette durée en fonction de la sortie du comparateur en agissant sur les signaux de synchronisation correspondant (ØV, V1 à V3) du détecteur, le circuit régulateur (38) comportant successivement un circuit de conversion analogique/numérique (44) du signal de sortie du comparateur, un circuit de comptage (45) à la fréquence ligne de l'information numérique de comparaison, et une bascule (46) commutée par la sortie du compteur et qui commande des circuits portes analogiques (47) insérées sur les connexions de synchronisation correspondantes.

11. Dispositif selon l'une quelconque des revendications 1 à 10, caractérisé en ce que l'optique de focalisation, le détecteur et les moyens d'atténuation optique sont montés sur un gyroscope (53—55—56) dont la toupie (57) entraîne ledit deuxième disque mobile (7).

12. Dispositif selon la revendication 11, caractérisé en ce que le gyroscope est du type à toupie extérieure, l'objectif étant du type Cassegrain avec son réflecteur primaire (50) qui supporte ledit premier disque fixe (6).

13. Utilisation d'un dispositif photodétecteur générateur d'images vidéo selon l'une quelconque des revendications 1 à 10 pour réaliser un autodirecteur television, caractérisé en ce que l'optique de focalisation, le détecteur et les moyens d'atténuation optique sont montés sur un gyroscope (53—55—56) à toupie (57) extérieure qui entraîne ledit deuxième disque mobile (7), l'objectif étant un montage Cassegrain avec le réflecteur primaire (50) solidaire du premier disque fixe (6).

## Patentansprüche

1. Photodetektorvorrichtung zur Erzeugung von Videobildern, vom Typ einer Festkörper-Kamera, die mit Ladungsverschiebung und Teilbildverschiebung arbeitet und mit einer automatischen Empfindlichkeitsregelung ausgestattet ist sowie eine Optik (1) zum Fokussieren der Strahlung auf die Bildzone eines Matrixdetektors (2), einen Generator (4) zur Erzeugung von Synchronisations-signalen des Detektors und Mittel (5 bis 10) zur Einstellung der Empfindlichkeit des Detektors umfaßt, mit einer Folgeregelung (5) des Videosignals durch Veränderung der Integrationsdauer (TI), während welcher die Elektronen der Bildzone (21) des Detektors während jeder Teilbildperiode (T3) gesammelt werden, dadurch gekennzeichnet, daß diese Mittel zur Einstellung der Empfindlichkeit des Detektors ferner umfassen: Mittel (6 bis 10) zur optischen Dämpfung unter Verwendung einer Gruppe von Scheiben (6, 7), die auf dem optischen Empfangsweg angeordnet sind, um auf die Lichtübertragung zu dem Detektor hin einzuwirken, sowie durch den Generator (4) synchronisierte Antriebsmittel (8 bis 11) zum Antreiben wenigstens einer (7) der Scheiben mit einer Drehbewegung und zur Erzeugung einer bildfrequenten periodischen Relativbewegung, wobei die Dämpfungsgruppe so ausgelegt ist, daß die optische Transmission im bildfrequenten Rhythmus variiert und einen eine Verschlußwirkung der Bildzone bewirkenden Minimalwert in jeder Bildperiode (T3) während des Zeitintervalls (T1) aufweist, während welchem die Verschiebung der in der Speicherzone (22) des Detektors (2) angesammelten Ladungen erfolgt, wobei der genannte Verschlußeffekt ein Anhalten der Ansammlung von Ladungen in der Bildzone nach sich zieht, wodurch der Variationseffekt der Integrationsdauer durch die Folgeregelung vervollständigt wird und die Anwendungsdynamik der Photodetektorvorrichtung gesteigert wird.

2. Vorrichtung nach Anspruch 1, dadurch gekennzeichnet, daß die Gruppe von Scheiben wenigstens zwei Scheiben (6) umfaßt, die einander gleich, eben und koaxial mit der optischen Achse (Z) sind und daß die Antriebsmittel (8 bis 11) eine Relativdrehung der Scheiben um die Achse mit einer Winkelgeschwindigkeit erzeugen, die synchron mit der Bildfrequenz ist.

3. Vorrichtung nach Anspruch 2, dadurch gekennzeichnet, daß die Gruppe von Scheiben zusammengesetzt ist aus einer feststehenden Scheibe (6) und einer beweglichen Scheibe (7), welche durch die Antriebsmittel (8 bis 11) bewegt wird.

4. Vorrichtung nach Anspruch 3, dadurch gekennzeichnet, daß die Scheiben aus einem lichtdurchlässigen Material gebildet sind und eine Schwärzung (61, 71) aufweisen, die auf einer Seite über einen Winkelsektor mit dem Zentrumswinkel $\pi + \theta/2$ aufgebracht ist, wobei der Winkel $\theta$ so bestimmt ist, daß er die gewünschte Verschlußdauer erzeugt, und wobei die die Schwärzungen tragenden Flächen im wesentlichen auf der Höhe der optischen Pupille einander gegenüber angeordnet sind.

5. Vorrichtung nach Anspruch 4, dadurch gekennzeichnet, daß einer der radialen Ränder der Ablagerung (61, 71) so gekrümmt ist, daß ein Beugungseffekt zum Zeitpunkt des Integrationsendes vermieden wird, welcher dem Anfangszeitpunkt der Ladungsüberführung entspricht.

6. Vorrichtung nach Anspruch 4 oder 5, dadurch gekennzeichnet, daß die Ablagerung einen zusätzlichen Sektor (72) mit variabler Dichte umfaßt, der ein abgestuftes bzw. getöntes, winkelförmiges Dämpfungselement bildet.

7. Vorrichtung nach Anspruch 3, dadurch gekennzeichnet, daß die Scheiben aus einem Polarisatormaterial gebildet sind und daß die Rotationsgeschwindigkeit synchron mit der halben Bildfrequenz ist.

8. Vorrichtung nach Anspruch 7, dadurch gekennzeichnet, daß sie eine dritte Polarisatorscheibe (6b) umfaßt, die feststehend und so orientiert ist, daß ihre Polarisationsachse parallel zu derjenigen der ersten, feststehenden Scheibe (6a) ist.

9. Vorrichtung nach einem der Ansprüche 3 bis 8, dadurch gekennzeichnet, daß die Antriebsmittel aus einer Phasenschleife gebildet sind, welche die bewegliche Scheibe hinsichtlich Stellung und Geschwindigkeit nachregelt, wobei diese Schleife in Reihenschaltung einen Phasenkomparator (32) zum Vergleichen der Rotationsfrequenz mit der Bildfrequenz, eine Filterschaltung (33) und einen Ansteuerverstärker (34) für einen Antriebsmotor (10) umfaßt.

10. Vorrichtung nach einem der Ansprüche 1 bis 9, dadurch gekennzeichnet, daß die Video-Folgeregelung in Reihenschaltung einen Schaltkreis (36) zum Integrieren des erfaßten Videosignals, der den Mittelwert (SVm) des Videosignals abgibt, einen Schwellwertkomparator (37) zum Vergleichen dieses Mittelwertes mit einem Bezugswert (VR) und eine Regelschaltung (38) zum Regeln der Integrationszeit umfaßt, welche diese Dauer in Anhängigkeit vom Ausgangssignal des Komparators verändert und auf die entsprechenden Synchronisationssignale (ØV, V1 bis V3) des Detektors einwirkt, wobei die Regelschaltung (38) hintereinander umfaßt: eine Analog-Digital-Umsetzschaltung (44) zum Umsetzen des Ausgangssignals des Komparators, eine mit der Zeilenfrequenz der digitalen Vergleichsinformation arbeitende Zählschaltung (45) und eine Kippschaltung (46), die durch den Ausgang des Zählers gesteuert ist und analoge Torschaltungen (47) steuert, die in die entsprechenden Synchronisationsverbindungen eingefügt sind.

11. Vorrichtung nach einem der Ansprüche 1 bis 10, dadurch gekennzeichnet, daß die Fokussieroptik, der Detektor und die optische Dämpfungseinrichtung an einem Gyroskop (53—55—56) angeordnet sind, dessen Kreisel (57) die zweite bewegliche Scheibe (7) mitnimmt.

12. Vorrichtung nach Anspruch 11, dadurch gekennzeichnet, daß das Gyroskop vom Typ mit äußerem Kreisel ist und das Objektiv vom Cassegrain-Typ ist, mit einem Primärreflektor (50), welcher die genannte erste feststehende Scheibe (6) trägt.

13. Verwendung einer Photodetektorvorrichtung zur Erzeugung von Videosignalen nach einem der Ansprüche 1 bis 10, zur Verwirklichung einer selbsttätig arbeitenden Fernseh-Richtanordnung, dadurch gekennzeichnet, daß die Fokussieroptik, der Detektor und die optische Dämpfungseinrichtung auf einem Gyroskop (53—55—56) mit äußerem Kreisel (57) angeordnet sind, welcher die zweite bewegliche Scheibe (7) mitnimmt, wobei das Objektiv eine Cassegrain-Anordnung mit einem Primärreflektor (50) ist, der mit der ersten feststehenden Scheibe (6) fest verbunden ist.

## Claims

1. Video image photo detector generator device of charge transfer, solid state camera type and operating by frames, provided with an automatic control of sensitivity and comprising focusing optics (1) for focusing the radiation onto the image zone of a matrix detector (2), a generator (4) for generating synchronization signals of the detector and detector sensitivity adjustment means (5 to 10) comprising means (5) for slaving the video signal by variation of the integration duration (TI) during which the electrons are collected in the image zone (21) of the detector during each frame period (T3), and being characterized in that the detector sensitivity adjustment means further comprise: optic attenuation means (6 to 10) using a group of discs (6—7) interposed on the optic reception path for affecting the light transmission towards the detector, and driving means (8 to 11) synchronized by the generator (4) for rotating at least one (7) of the discs and providing a periodical relative movement at the frame frequency, the attenuation group being determined in such a manner that the optic transmission is thus varied at the frame rhythm, having a minimum value producing a shutter effect of the image zone at each frame period (T3) during the time interval (T1) during which the transfer of the collected charges towards the memory zone (22) of the detector (2) is performed, said shutter effect causing termination of charge collection in the image zone, thus completing the effect of the variation of the integration duration by the slaving means and increasing the dynamic performance of the photo detector devices.

2. Device in accordance with claim 1, characterized in that the group of discs comprises at least two discs (6, 7) which are identical, plane and coaxial with the optic axes (2), and that the driving means (8 to 11) produce a relative rotation of the discs about the axis at an angular velocity which is synchronous with the frame frequency.

3. Device in accordance with claim 2, characterized in that the group of discs is composed of a stationary disc (6) and a movable disc (7) driven by the driving means (8 to 11).

4. Device in accordance with claim 3, characterized in that the discs are made of transparent material and are provided with opacities (61, 71) deposited on one face across a sector of the center angle $\pi+\theta/2$, the angle $\theta$ being determined to produce the desired shutter duration and the faces carrying the opacities being opposed to each other substantially at the level of the optic aperture.

5. Device in accordance with claim 4, characterized in that one of the radial edges of the deposit is curved (61, 71) in a manner to avoid a diffraction effect at the moment of termination of integration corresponding to the intial moment of charge transfer.

6. Device in accordance with claims 4 or 5, characterized in that the deposit comprises an additional sector (72) having a variable density and forming an angular graduated attenuator.

7. Device in accordance with claim 3, characterized in that the discs are formed of polarizing material and in that the rotational speed is made synchronous with the frame half-frequency.

8. Device in accordance with claim 7, characterized in that it comprises a third polarizing disc (6b) which is stationary and oriented in such a manner that its polarization axis is parallel to that of the first stationary disc (6a).

9. Device in accordance with any of claims 3 to 8, characterized in that the driving means are formed of a phase loop slaving the position and speed of the movable disc, the loop comprising, in series, a phase comparator (32) for comparing the rotational frequency with the frame frequency, a filter circuit (33) and an amplifier (34) feeding motor means (10).

10. Device in accordance with any of claims 1 to 9, characterized in that the video slaving means comprise, in series, an integration circuit (36) for integrating the detected video signal and providing the mean video value (SVm), a threshold comparator (37) for comparing this mean value with a reference value (VR), and a control circuit (38) for controlling the integration time and modifying this duration in dependence on the output of the comparator, and affecting the corresponding synchronisation signals (ØV, V1 to V2) of the detector, the control circuit (38) successively comprising an analog-digital conversion circuit (44) for converting the output signal of the comparator, a counting circuit (45) operating at the line frequency of the digital comparison information, and a flip-flop circuit (46) controlled by the output of the counter and driving analog switching circuits (47) interposed into the corresponding synchronization connections.

11. Device in accordance with any of claims 1 to 10, characterized in that the focusing optics, the detector and the optic attenuation means are mounted on a gyroscope (53—55—56) the gyro (57) of which drives said second movable disc (7).

12. Device in accordance with claim 11, characterized in that the gyroscope is of external gyro type, the objective being of Cassegrain-type and having a primary reflector (50) supporting said first stationary disc (6).

13. Use of a video image generating photo detector device in accordance with any of claims 1 to 10 for forming a television auto-director, characterized in that the focusing optics, the detector and the optic attenuation means are mounted on a gyroscope (53—55—56) having an external gyro (57) driving said second movable disc (7), the objective being a Cassegrain-system having a primary reflector (50) joined with the first stationary disc (6).

FIG_1

FIG_2

# FIG_3

## 3-a

## 3-b

## 3-c

## 3-d

## 3-e

## 3-f

# FIG_4

# FIG_5

2

# FIG_6

# FIG_7

7-a

7-b

7-c

7-d

# FIG_8

0 032 334

# FIG_9

# FIG_10

4

# FIG_11

# FIG_12

# FIG_13